# EUROPÄISCHE PATENTSCHRIFT

(11) **EP 1 550 896 B1**
(45) Veröffentlichungstag und Bekanntmachung des Hinweises auf die Patenterteilung: **19.10.2011**
(21) Anmeldenummer: 04011495.1
(22) Anmeldetag: 14.05.2004
(51) Int. Cl.: G02C 5/22, G02C 1/08

(54) **Brille**
Spectacles
Lunettes

(30) Priorität: 31.12.2003 DE 10361797
(43) Veröffentlichungstag der Anmeldung: 06.07.2005
(60) Teilanmeldung: 08003642.9
(73) Patentinhaber: Temming, Markus, 33334 Gütersloh (DE)
(72) Erfinder: Temming, Markus, 33334 Gütersloh (DE)
(74) Vertreter: Rolf, Gudrun

(56) Entgegenhaltungen:
- EP-A1- 0 690 331
- WO-A1-00/29897
- DE-A1- 4 341 830
- DE-U- 8 902 196
- US-A1- 2003 223 032

## Beschreibung

Die Erfindung betrifft eine Brille gemäß dem Oberbegriff des Hauptanspruches.

Brillen sind in vielerlei technischer wie optischer Ausgestaltung bekannt und weisen zum Teil einen recht komplexen Aufbau auf, wie etwa eine Verspannung der Gläser mittels über Schrauben geklemmten Glaseinfassungen oder aufwändigen Scharnier- oder Gestellkonstruktionen, was die Herstellung solcher Brillen deutlich verkompliziert und verteuert.

Es ist eine Brille für leicht in der Bewegung Ihrer Hände eingeschränkte Personen bekannt, WO 00/29897 A1, welche ein Brillengestell mit über Scharnieren daran angelenkten Brillenbügeln beschreibt, die mindestens in ihren dem Brillengestell zugewandten Endbereichen kreiszylindrische Querschnitte aufweisen und die in einer zur Ebene des Brillengestells parallelen Richtung etwa vertikal verlaufend ausgerichtet sind, wobei im Brillengestell Aufnahmeöffnungen für die Endbereiche der Brillenbügel vorgesehen sind, die in einer Ebene hinter der des Brillengestells, zum Brillenträger hin, angeordnet sind. Zur Vereinfachung des Ausklappens der Brillenbügel sind in den Endbereichen etwa rechtwinklig davon abstehende Hebel vorgesehen.

Aufgabe der Erfindung ist es, eine neuartige Brille zur Verfügung zu stellen, die einfach aufgebaut und kostengünstig herzustellen ist. Insbesondere soll sie ein einfaches Brillengestell sowie ein vereinfachtes Bügelgelenk aufweisen. Weiterhin sollen das Brillengestell und das Bügelgelenk möglichst wirtschaftlich herzustellen sein.

Die erfindungsgemäße Lösung dieser Aufgabe ergibt sich aus den Merkmalen des kennzeichnenden Teils des Hauptanspruches.

Einen besonders wesentlichen Beitrag zur Vereinfachung der Herstellung einer kostengünstigen Brille liefert die neuartige Konstruktion des Bügelscharniers, welche Brillenbügel erfordert, die mindestens in ihren Endbereichen kreiszylindrische Querschnitte aufweisen, vorteilhafterweise aber vollständig aus dünnem Draht, etwa aus Titan, bestehen. Dieser ist in seinem Endbereich in eine zur Ebene des Brillenglases bzw. des Brillengestells parallel etwa vertikal nach unten oder oben umgebogen und durchtritt die Ebene des Brillengestells von hinten nach vorne, sei es seitlich um die Gläser oder das Brillengestell herum oder von unten oder von oben oder durch eine Ausnehmung im Brillengestell oder in einem Glas. In der Brille sind weitere Ausnehmungen für die Scharnierbauteile vorgesehen, die Aufnahmeöffnungen für die umgebogenen Endbereiche der beiden Brillenbügel aufweisen oder erzeugen. Die Endbereiche der Brillenbügel sind so in diese Aufnahmeöffnungen eingeführt und die Scharnierbauteile von vorne nach hinten in die Ausnehmungen der Brille so eingesetzt, dass eine formschlüssige Verriegelung in eine zu erwartende Hauptzugrichtung eines Brillenbügels nach hinten erzeugt ist, da Abschnitte des freien Endbereichs auf der Vorderseite des Brillengestelles aufliegen.

Dieser Grundgedanke eines neuen Bügelgelenkes ermöglicht Ausgestaltungen der Erfindung in einer nahezu unbegrenzten Anzahl, wobei eine besonders bevorzugte Ausführungsform Scharnierbauteile aufweist, die zumindest in Teilbereichen geringfügig elastisch ausgebildet sind und zumindest während der Montage elastisch so verformt werden können, dass sie danach form- und/ oder kraftschlüssig in den Ausnehmungen festgelegt sind. Auf eine Fixierung mittels Schrauben oder etwa über Klebstoffe kann somit gänzlich verzichtet werden. Dieses einfache Zusammenstecken vorgefertigter Teile erfordert keine aufwändigen Werkzeugmaschinen oder hoch qualifiziertes Personal, sodass eine sehr wirtschaftliche Fertigung dieser einfachst aufgebauten Brillen ermöglicht ist.

Um den etwa rechtwinklig umgebogene Endbereich eines Brillenbügels in die Aufnahme eines Scharnierbauteils einführen zu können, weist das Brillengestell vorteilhafterweise eine weitere Ausnehmung auf, die der Endbereich des Brillenbügels von hinten nach vorne durchtritt, wobei diese weitere Ausnehmung vorteilhafterweise die Form eines etwa horizontal verlaufenden Langloches aufweist und die Endbereiche des Langloches so platziert sind, dass sie die Bewegungsbegrenzung für den möglichen Schwenkwinkel des Brillenbügels bilden. Eine solche Konstruktion hat den Vorteil, dass nach deren Zusammenbau quasi eine formschlüssige Ausrutschsicherung des Endbereiches des Brillenbügels aus der Ausnehmung des Scharnierbauteils gewährleistet ist, ohne dazu komplizierte mechanische Vorkehrungen treffen zu müssen, da die dem Scharnierbauteil abgewandte Seite der weiteren Ausnehmung eine entsprechende Funktionsfläche bildet.

Hierbei ist es wahlfrei die weitere Ausnehmung oberhalb oder unterhalb der Ausnehmung für die Scharnierbauteile anzuordnen, da diese beschriebene Funktion stets gewährleistet bleibt.

Besonders vorteilhaft ist auch die Möglichkeit, die angesprochenen Ausnehmungen nicht unbedingt im Brillengestell selbst vorsehen zu müssen, sondern diese auch in den Seitenbereich eines Glases einbringen zu können. Dies ermöglicht nicht nur einen besonders einfachen Grundaufbau der zur Verfügung gestellten Brille, sondern erlaubt auch ein hohes Maß an Variationsmöglichkeiten in der Gestaltung einer solchen Brille.

Um einen festen spielfreien und definierten Sitz eines solchen Scharnierbauteiles zu gewährleisten, kann dieses seitliche Randausnehmungen aufweisen, die dem Maß der Wanddicke des Brillengestells entsprechen, sodass ein formschlüssiger Sitz des Scharnierbauteiles im Brillengestell gewährleistet werden kann.

Ein besonders bevorzugtes Scharnierbauteil weist die Form eines kleinen Blockes auf, der als Aufnahmeöffnung für das Ende eines Brillenbügels eine etwa senkrecht verlaufende Bohrung besitzt und eine sich von der Bohrung radial nach hinten erstreckende Schlitzausnehmung, sodass sich der hintere Bereich des Blockes zur Montage in ein Brillengestell leicht zusammendrücken lässt, der nach der Montage seine ursprüngliche Form wieder einnimmt und so den Block in der Ausnehmung klemmt. Um die Reibwerte des Bügelgelenkes vorherbestimmen zu können, kann in der Aufnahme des Blockes eine Kunststoffhülse mit einer Innenbohrung für den Endbereich des Brillenbügels vorgesehen sein.

Entsprechend einer weiteren vorteilhaften Ausführungsform der Brille weist diese benachbart der Ausnehmung für das Scharnierbauteil gegenüber der weiteren Ausnehmung eine zusätzliche Ausnehmung auf, in die sich ein nochmals um etwa 90 Grad zurück umgebogenes Endstück des Endbereichs des Brillenbügels erstreckt, welches in diese zusätzliche Ausnehmung eingreift oder diese auch vollständig durchgreift. In letzterem Fall könnte der Brillenbügel auch so lang ausgeführt sein, dass quasi ein doppelter Brillenbügel gebildet wird, der möglicherweise optischen Zwecken dienen kann, oder aber die Stabilität des ersten Brillenbügels vergrößert.

Andere vorteilhafte Konstruktionen können so ausgeführt sein, dass der Endbereich eines Brillenbügels zwar die Ebene eines Brillengestells durchtritt, ohne jedoch das Brillengestell oder ein Glas selber zu durchgreifen, nämlich in dem die Seitenbereiche des Brillengestells oder der Gläser von diesem oben, unten oder seitlich umgriffen wird und er vor der Ebene des Brillengestells in das Scharnierbauteil eingreift.

Eine andere, besonders einfache und kostengünstige Ausführungsform eines Scharnierbauteils besteht aus einem etwa U-förmig gebogenen elastischen Flachmaterial, wie etwa aus einem Federstahlblech, welches sich mit seinen freien Schenkeln in oder durch die Ausnehmung des Brillengestells erstreckt und die Aufnahmeöffnung für den Endbereich eines Brillenbügels von dem gebogenen Verbindungsschenkel gebildet wird. Zur Vermeidung von scharfen Körperkanten kann das Federstahlblech zusätzlich an seinen freien Schenkeln mit zueinander umgebogenen Laschen versehen sein, die sich gegenseitig abdecken oder aber die freien Schenkel können so geformt sein, dass sie sich entweder innerhalb der Ausnehmung im Brillengestell an deren Innenseiten abstützen oder unmittelbar hinter der Ausnehmung seitlich von hinten auf dem Brillengestell aufliegen.

Eine weitere vorteilhafte Ausführungsform des erfinderischen Scharnierbauteils ist als flacher, etwa U- oder V-förmiger Blech- oder Drahtbügel ausgebildet, dessen freien Schenkel von vorne in die Ausnehmung der Brille eingesetzt sind, wobei der Verbindungsschenkel und die Ansätze der Seitenschenkel wieder die Aufnahmeöffnung des Scharnierbauteils bilden. Um bei einer solchen Ausführungsform eine sichere Führung des Endbereiches eines Brillenbügels gewährleisten zu können, ist es hier von Vorteil, mindestens zwei solcher Blech- oder Drahtbügel als Scharnierbauteil zu verwenden.

Allen vorgenannten Ausführungsformen ist es gemein, dass der Endbereich eines Bügels mindestens eine gemeinsame Auflagerfläche mit der Vorderseite des Brillengestells aufweist, welches somit einen Teil des Scharniers bildet. Dies gilt auch für eine Ausführungsform mit einem Scharnierblock, wobei der Endbereich eines Brillenbügels länger ausgeführt ist als das Maß der Höhe eines Blocks beträgt, sodass die aus dem Block hervorragenden Abschnitte zumindest eine Linienberührung mit dem Brillengestell oder, für den Fall, dass das Bügelgelenk in einem Glas eingesetzt ist, mit dem Glas aufweist, wie das bei den übrigen angeführten Endbereichen der Brillenbügel ebenfalls der Fall ist.

Das so erzeugte Bügelgelenk kommt damit ohne andere Gelenkbauteile aus, welche an einem Brillengestell vorgesehen, etwa angelötet oder angeschraubt werden müssten, wie auch die gesamte Gelenkkonstruktion ohne die Verwendung von stoffschlüssigen Verbindungen oder Kleb- oder Schraubverbindungen auskommt.

Nachfolgend sind einige Ausführungsbeispiele der Erfindung anhand der Zeichnungen näher beschrieben. Es zeigen:
- Fig. 1 - 4: Ansichten verschiedener Brillenausführungen,

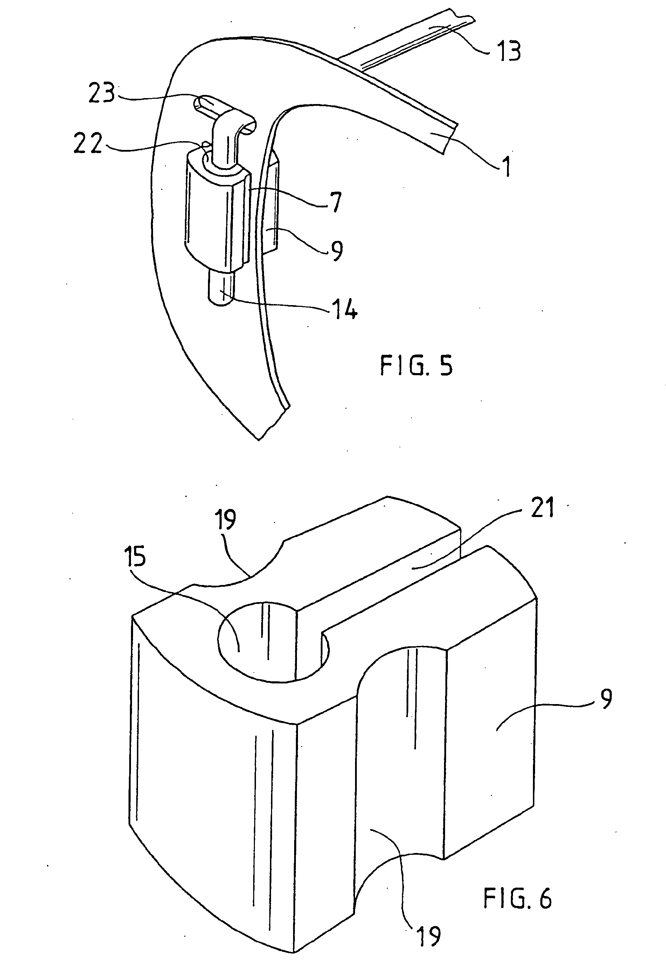

- Fig. 5: eine 3-D-Darstellung einer Brille in Teilansicht,
- Fig. 6: eine vergrößerte 3-D-Darstellung eines Scharnierbauteils,
- Fig. 7: eine 3-D-Darstellung einer weiteren Brille im Schnitt;
- Fig. 8: eine vergrößerte Darstellung eines Scharnierbauteils der Fig. 7,
- Fig. 9: eine 3-D-Darstellung einer weiteren Brille im Teilschnitt,
- Fig. 10-11: Scharnierbauteile einer Brille gem. Fig. 9.

Die Brille besteht aus einem Brillengstell 1-6 gleicher Dicke, welches insbesondere aus einer dünnen ebenen Platte ausgeformt, etwa ausgesägt, ausgestanzt oder ausgeschnitten ist, letzteres wahlfrei mechanisch, per Licht oder per Wasserstrahl. Denkbar ist jedoch auch die Herstellung in einer Spritzgussform.

Im seitlichen Bereich des Brillengestells 1 ist dieses mit einer ersten Ausnehmung 7 versehen, in die sich ein als Block ausgebildetes Scharnierbauteil 9 erstreckt welches eine senkrechte Aufnahmeöffnung 15 für den umgebogenen Endbereich 14 des Brillenbügels 13 aufweist sowie eine Schlitzausnehmung 21, die eine geringfügige Verformung des Scharnierbauteils 9 zum Einführen in die Ausnehmung 7 im Brillengestell 1 ermöglicht. Die dem Brillengestell 1 seitlich zugewandten Flächen des Scharnierbauteils 9 weisen Randausnehmungen 19 auf, in die sich nach Montage die Körperkanten der Ausnehmung 7 hinein erstrecken und das Scharnierbauteil 9 fixieren. Oberhalb der Ausnehmung 7 ist eine weitere Ausnehmung 23 in das Brillengestell 1 eingebracht, durch das sich der Endbereich 14 des Brillenbügels 13 hindurch erstreckt. Die Reihenfolge eines Zusammenbaus erfolgt so, dass zunächst der Brillenbügel 13 durch die weitere Ausnehmung 23 von hinten nach vorne hindurch geführt wird, sein Endbereich 14 in die Aufnahmeöffnung 15 des Scharnierbauteils 9 oder einer darin eingesetzten Kunststoffhülse 22 hinein bzw. hindurch durchgesteckt und anschließend das Scharnierbauteil 9 von vorne nach hinten in das Brillengestell eingesteckt wird. Der Endbereich 14 des Brillenbügels 13 durchtritt dabei das Scharnierbauteil 9 und weist mit dem Brillengestell 1 zusammen eine Linienberührung oberhalb und unterhalb des Scharnierbauteils 9 auf.

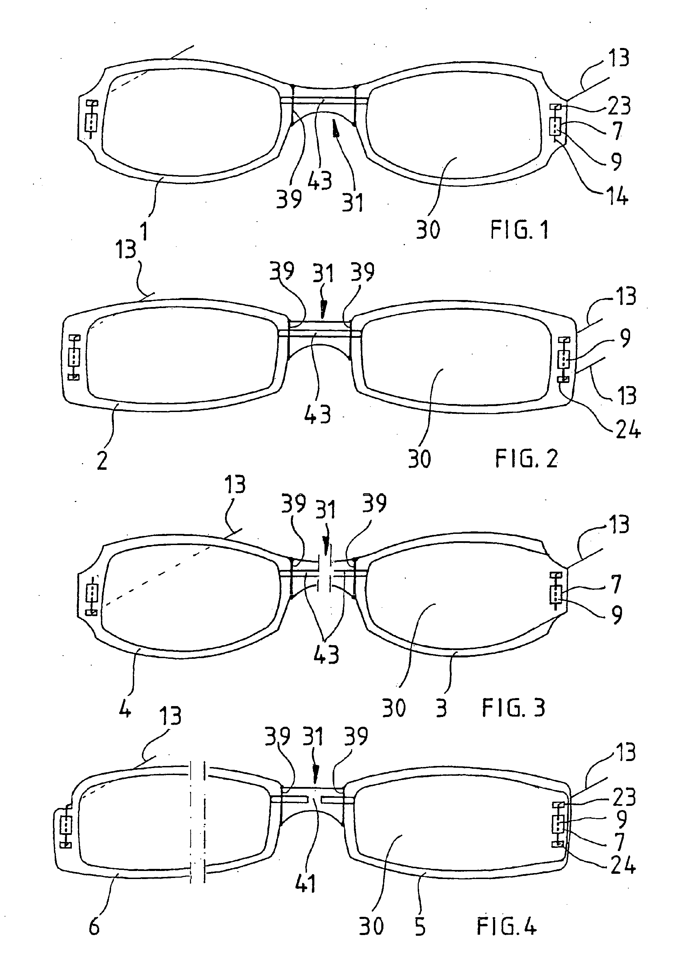

Bei Ausführungsformen, wie sie rechts in den Figuren 3 und 4 dargestellt sind, sind die Bügelgelenke nicht im Brillengestell 1, sondern jeweils in den Außenbereichen der Gläser 30 angeordnet.

Wie links in der Fig. 3 dargestellt ist, kann der Brillenbügel 13 auch durch eine weitere Ausnehmung 23 durch das Brillengestell 3 hindurch geführt sein, die unterhalb der Ausnehmung 7 für ein Scharnierbauteil 9-12 angeordnet ist.

Wie links in Fig. 4 dargestellt ist, muss ein Brillenbügel 13 nicht notwendigerweise die Ebene des Brillengestells 6 durch eine weitere Ausnehmung 23 hindurch durchgreifen, sondern kann auch, wie dort dargestellt, das Brillengestell 6 von oben übergreifen. Er könnte es jedoch auch, wie zeichnerisch nicht dargestellt, ein Brillengestell seitlich oder von oben oder unten umgreifend ausgeführt sein. Dabei ist nur darauf zu achten, dass Teilbereiche des Brillengestells weiterhin Bewegungsbegrenzungen und/ oder Funktionsflächen für die Brillenbügel bilden.

In den Fig. 2 und 4 sind weitere Varianten eines Bügelgelenkes dargestellt, die neben der Ausnehmung 7 für ein Scharnierbauteil 9 und der weiteren Ausnehmung 23 für den Brillenbügel 13 eine zusätzliche Ausnehmung 24 unterhalb der Ausnehmung 7 aufweisen und bei denen der Endbereich 14 eines Brillenbügels so ein weiteres mal etwa rechtwinklig nach hinten umgeformt sein kann, dass er sich in diese zusätzlich Ausnehmung 24 hindurch erstreckt, falls dies aus optischen oder technischen Gründen gewünscht ist. Denkbar, zeichnerisch aber nicht dargestellt, ist eine Ausführungsform des Bügelgelenkes, die zwei etwa zueinander parallele Brillenbügelabschnitte aufweist, wobei sich der erste Brillenbügelabschnitt durch eine weitere Ausnehmung 23 von hinten nach vorne erstreckt und nach einer zweiten etwa rechtwinkligen Umformung durch die zusätzliche Ausnehmung 24 von vorne nach hinten weitergeführt ist.

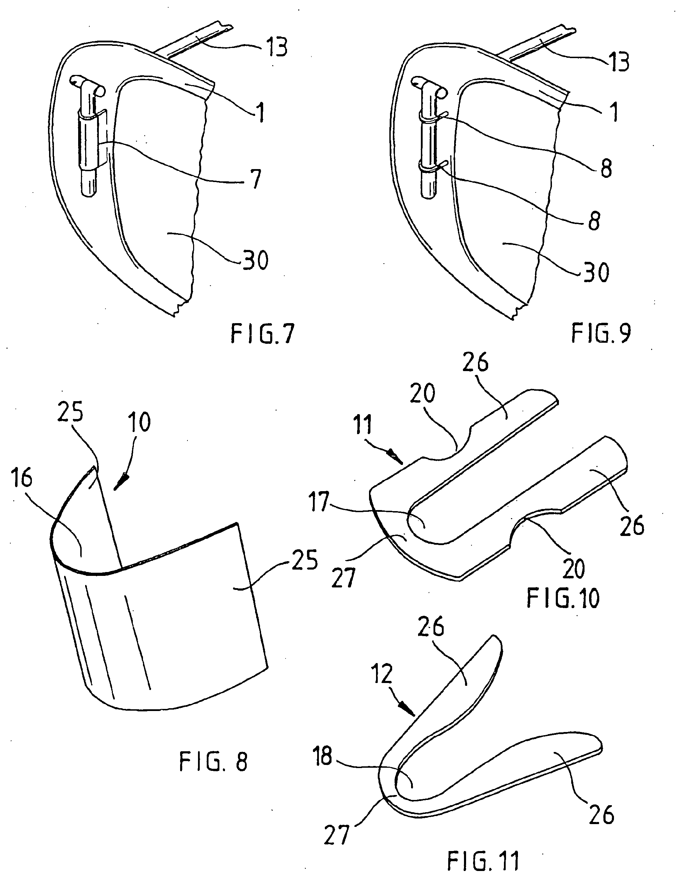

Eine weitere Variante des Bügelgelenkes ist in den Figuren 7 und 8 dargestellt, wobei die Fig. 8 ein vergrößertes Scharnierbauteil 10 zeigt, welches aus einem einfachen elastischen Materialstreifen, insbesondere aus einem Federstahlblechstreifen besteht, der um den Endbereich 14 eines Brillenbügels 13 herumgelegt und dessen freie Schenkel 25 zusammengepresst in die Ausnehmung 7 im Brillengestell 1 eingeführt wird, worauf seine beiden freien Schenkel 25 sich aufgrund der elastischen Kräfte versuchen aufzuspreizen, wodurch die Fixierung eines Endbereiches 14 eines Brillenbügels 13 in der von dem Materialstreifen gebildeten Aufnahmeöffnung des Scharnierbauteils 10 erfolgt.

Die Endbereiche der freien Schenkel 25 können auch andersartig ausgebildet sein, etwa parallel zur Rückwand des Brillengestells umgefaltet und sich gegenseitig überlagernd oder aber noch weiter spitzwinklig nach außen umgeformt sein, sodass sich eine noch bessere Verkeilung dieses Scharnierbauteils 10 im Brillengestell 1 einstellt.

In den Fig. 9 bis 11 ist eine weitere Variante eines Bügelgelenks dargestellt, die statt einer großen Ausnehmung 7 zwei Schlitzausnehmungen 8 aufweist, in die als geschlitzte Federscheiben ausgebildete Scharnierbauteile 11;12 eingesetzt sind, die jeweils freie Schenkel 26 aufweisen, sowie eine Aufnahmeöffnung 17; 18 für den Endbereich 14 eines Brillenbügels 13 und die zusätzlich auch seitliche Randausnehmungen 20 besitzen können, um im Brillengestell 1 fixiert werden zu können.

Die Brille verwirklicht ein sehr einfaches Stecksystem und eine sehr einfache Verglasung bei sehr geringen Fertigungskosten.

## Patentansprüche

1. Brille aus einem Brillengestell (1-6) mit einer Halterung für die Brillengläser (30) und mit einer Nasenauflagerung sowie mit über Scharniere angelenkten Brillenbügeln, (13), wobei ein Brillenbügel (13) mindestens in seinem dem Brillengestell (1-6) zugewandten Endbereich (14) einen kreiszylindrischen Querschnitt aufweist, der in eine zur Ebene des Brillengestells (1-6) parallelen, etwa vertikalen Richtung ausgerichtet ist und in dem Brillengestell (1-6) Aufnahmeöffnungen (15-18) für die Endbereiche (14) der Brillenbügel (13) vorgesehen sind, die darin angeordnet sind, **dadurch gekennzeichnet, dass** der Brillenbügel diese Ebene von hinten nach vorn durchtritt, dass in dem Brillengestell (1-6) Ausnehmungen (7; 8) für Scharnierbauteile (9-12) vorgesehen sind, die die Aufnahmeöffnungen (15-18) für die Endbereiche (14) der Brillenbügel (13) aufweisen, die darin angeordnet sind und dass die Scharnierbauteile (9-12) von vorn nach hinten in die Ausnehmungen (7) der Brille eingesetzt sind und der Endbereich (14) eines Brillenbügels (13) die Ebene des Brillengestells (1-6) seitlich umgreift oder durch eine weitere Ausnehmung (23) in der Brille von hinten nach vorn durchtritt.

2. Brille nach Anspruch 1, **dadurch gekennzeichnet, dass** die Scharnierbauteile (9-12) zumindest in Teilbereichen elastisch ausgebildet und in den Ausnehmungen (7) der Brille form- und/ oder kraftschlüssig festgelegt sind.

3. Brille nach einem der vorgenannten Ansprüche, **dadurch gekennzeichnet, dass** ein Scharnierbauteil (9;11) eine Randausnehmung (19;20) von dem Maß der Wanddicke des Brillengestells (1-6) aufweist.

4. Brille nach einem der vorgenannten Ansprüche, **dadurch gekennzeichnet, dass** ein Scharnierbauteil (9) die Form eines Blockes aufweist, der als Aufnahmeöffnung (15) eine Bohrung besitzt, mit einer sich von der Bohrung radial nach hinten außen erstreckenden Schlitzausnehmung (21).

5. Brille nach Anspruch 4, **dadurch gekennzeichnet, dass** in der Aufnahmeöffnung (15) eine Kunststoffhülse (22) mit Innenbohrung für den Endbereich (14) des Brillenbügels (13) angeordnet ist.

6. Brille nach einem der vorgenannten Ansprüche, **dadurch gekennzeichnet, dass** die weitere Ausnehmung (23) die Form eines etwa horizontal verlaufenden Langloches aufweist und die Endbereiche (14) des Langloches den Bewegungsanschlag der Brillenbügel (13) bilden.

7. Brille nach einem der vorgenannten Ansprüche, **dadurch gekennzeichnet, dass** ein Scharnierbauteil (10) die Form eines etwa U-förmig gebogenen elastischen Materialstreifens, wie ein Federstahlblech aufweist, mit freien Schenkeln (25), die sich in oder durch die Ausnehmung (7) im Brillengestell (1-6) erstrecken.

8. Brille nach Anspruch 7, **dadurch gekennzeichnet, dass** das Federstahlblech an den freien Schenkeln (25) mit zueinander umgebogenen Laschen versehen ist, die sich gegenseitig abdecken.

9. Brille nach einem der vorgenannten Ansprüche, **dadurch gekennzeichnet, dass** das Scharnierbauteil (11;12) als flacher etwa U- oder V-förmiger Blechbügel oder Stahldraht ausgebildet ist, dessen freien Seitenschenkel (26) von vorn in die Ausnehmung (7) der Brille eingesetzt sind, wobei der Verbindungsschenkel (27) und die Ansätze der Seitenschenkel (26) die Aufnahmeöffnung (17;18) des Scharnierbauteils (11;12) bilden.

10. Brille nach einem der vorgenannten Ansprüche, **dadurch gekennzeichnet, dass** die Ausnehmungen (7) für die Scharnierbauteile (9-12) im Brillengestell (1-5) oder in den äußeren Randbereichen der Gläser (30) eingebracht sind.

11. Brille nach einem der vorgenannten Ansprüche, **dadurch gekennzeichnet, dass** die Endbereiche (14) der Brillenbügel (13) von oben nach unten oder von unten nach oben durch die Scharnierbauteile (1-6) geführt sind.

12. Brille nach einem der vorgenannten Ansprüche, **dadurch gekennzeichnet, dass** die Endbereiche (14) der Brillenbügel (13) an ihren letzten Endstücken wieder in Richtung auf den Brillenbügel (13) zurück umgeformt sind und in eine zusätzliche Ausnehmung (24) in der Brille eingreifen oder diese durchgreifen.

13. Brille nach Anspruch 12, **dadurch gekennzeichnet, dass** ein die zusätzliche Ausnehmung (24) durchgreifendes Stück eines Brillenbügels (13) weiter in Richtung auf den ersten Brillenbügel (13), einen doppelten Brillenbügel bildend, geführt ist.

14. Brille nach einem der vorgenannten Ansprüche, **dadurch gekennzeichnet, dass** ein Endbereich (14) eines Brillenbügels (13) das Brillengestell (1-6) oder ein Glas (30) seitlich umgreift.

15. Brille nach einem der vorgenannten Ansprüche, **dadurch gekennzeichnet, dass** die Vorderseite des Brillengestells (1-6) oder eines Glases (30) eine linienförmige Auflagerfläche für den Endbereich (14) des Brillenbügels (13) und damit einen Teil des Scharniers bildet.

16. Brille nach einem der vorgenannten Ansprüche, **dadurch gekennzeichnet, dass** die Kontur des Brillengestells aus einer ebenen Platte ausgeformt ist.

17. Brille nach Anspruch 16, **dadurch gekennzeichnet, dass** die Platte überall die gleiche Wandstärke aufweist.

18. Brille nach einem der vorgenannten Ansprüche, **dadurch gekennzeichnet, dass** das Brillengestell (1) aus einem beide Gläser (30) zumindest teilweise von oben umschließenden oberen Fassungsteil (32) und einen beide Gläser zumindest teilweise von unten umschließenden unteren Fassungsteil (33) besteht, die jeweils dazwischen angeordnete und voneinander mindestens geringfügig beabstandete Verbindungsstege (34;35) aufweisen, die beide zur Befestigung eines Glases (30) von einem Klemmbügel (36;37;38) gegeneinander gespannt gehalten sind.

19. Brille nach Anspruch 18, **dadurch gekennzeichnet, dass** der Klemmbügel (36) unmittelbar benachbart jeden Glases (30) die Verbindungsstege (34; 35) mittels einer Klemme (39) verspannt und das beide Klemmen (39) über einen Verbindungsbügel (40) miteinander verbunden sind.

20. Brille nach Anspruch 19, **dadurch gekennzeichnet, dass** der Verbindungsbügel (40) als Stabilisierungsteil der Verbindungsstege (34;35) und damit der gesamten Brille ausgebildet ist.

21. Brille nach Anspruch 19, **dadurch gekennzeichnet, dass** der Verbin- dungsbügel (40) als Nasenauflagerung der Brille ausgebildet ist.

22. Brille nach einem der vorgenannten Ansprüche 18 bis 21, **dadurch gekennzeichnet, dass** am Klemmbügel (36;37;38) Fortsätze (42) für die Nasenauflagerflächen angeordnet sind.

23. Brille nach einem der vorgenannten Ansprüche 18 bis 22, **dadurch gekennzeichnet, dass** das obere und das untere Fassungsteil (32; 33) im Bereich ihrer Verbindungsstege (34; 35) über einen Kuppelsteg (41) miteinander verbunden sind.

24. Brille nach einem der vorgenannten Ansprüche 18 bis 23, **dadurch gekennzeichnet, dass** im Brillengestell (1-6) Aufnahmenuten (44) für die Klammern (39) vorgesehen sind.

## Claims

1. Spectacles consisting of a frame (1-6) with a holder for the lenses (30) and with a nose support, and also with arms (13) articulated via hinges, wherein an arm (13), at least in its end area (14) directed towards the frame (1-6), has a circular cylindrical cross section which is oriented in an approximately vertical direction parallel to the plane of the frame (1-6), and the frame (1-6) is provided with receiving openings (15-18) for the end areas (14) of the arms (13), which are arranged therein, **characterized in that** the arm passes through this plane from the rear forwards, **in that** the frame (1-6) is provided with recesses (7; 8) for hinge components (9-12) which have the receiving openings (15-18) for the end areas (14) of the arms (13), which are arranged therein, and **in that** the hinge components (9-12) are inserted from the front rearwards into the recesses (7) of the spectacles, and the end area (14) of an arm (13) engages laterally around the plane of the frame (1-6) or passes from the rear forwards through a further recess (23) in the spectacles.

2. Spectacles according to Claim 1, **characterized in that** the hinge components (9-12) are elastic at least in some areas and are secured with a form fit and/or force fit in the recesses (7) of the spectacles.

3. Spectacles according to either of the preceding claims, **characterized in that** a hinge component (9; 11) has an edge recess (19; 20) of the size of the wall thickness of the frame (1-6).

4. Spectacles according to one of the preceding claims, **characterized in that** a hinge component (9) has the form of a block which has a bore (15) as receiving opening (15), with a slit recess (21) extending radially outward and rearwards from the bore.

5. Spectacles according to Claim 4, **characterized in that** a plastic sleeve (22) with an inner bore for the end area (14) of the arm (13) is arranged in the receiving opening (15).

6. Spectacles according to one of the preceding claims, **characterized in that** the further recess (23) has the form of an approximately horizontally extending oblong hole, and the end areas (14) of the oblong hole form the movement abutment of the arms (13).

7. Spectacles according to one of the preceding claims, **characterized in that** a hinge component (10) has the form of a strip of elastic material, such as a spring steel plate, bent approximately in a U-shape, with free branches (25) extending into or through the recess (7) in the frame (1-6).

8. Spectacles according to Claim 7, **characterized in that** the spring steel plate is provided, on the free branches (25), with tabs that are bent towards each other and overlap each other.

9. Spectacles according to one of the preceding claims, **characterized in that** the hinge component (11; 12) is designed as a flat, approximately U-shaped or V-shaped sheet-metal bracket or steel wire, of which the free side branches (26) are inserted from the front into the recess (7) of the spectacles, wherein the connecting branch (27) and the extensions of the side branches (26) form the receiving opening (17; 18) of the hinge component (11; 12).

10. Spectacles according to one of the preceding claims, **characterized in that** the recesses (7) for the hinge components (9-12) are formed in the frame (1-6) or in the outer edge areas of the lenses (30).

11. Spectacles according to one of the preceding claims, **characterized in that** the end areas (14) of the arms (13) are guided from the top downwards or from the bottom upwards through the hinge components (1-6).

12. Spectacles according to one of the preceding claims, **characterized in that** the end areas (14) of the arms (13) are, at their last end portions, turned back again in the direction of the arm (13) and engage in or engage through an additional recess (24) in the spectacles.

13. Spectacles according to Claim 12, **characterized in that** a portion of an arm (13) engaging through the additional recess (24) is guided further in the direction of the first arm (13), forming a double arm.

14. Spectacles according to one of the preceding claims, **characterized in that** an end area (14) of an arm (13) engages laterally around the frame (1-6) or a lens (30).

15. Spectacles according to one of the preceding claims, **characterized in that** the front face of the frame (1-6) or of a lens (30) forms a linear support surface for the end area (14) of the arm (13) and thus forms part of the hinge.

16. Spectacles according to one of the preceding claims, **characterized in that** the contour of the frame is shaped from a flat plate.

17. Spectacles according to Claim 16, **characterized in that** the plate has the same wall thickness throughout.

18. Spectacles according to one of the preceding claims, **characterized in that** the frame (1) consists of an upper frame part (32) at least partially enclosing both lenses (30) from above and of a lower frame part (33) at least partially enclosing both lenses from below, between which frame parts there are connecting webs (34; 35) which are spaced at least slightly apart from each other and which, in order to secure a lens (30), are both held tightly against each other by a clamping bracket (36; 37; 38).

19. Spectacles according to Claim 18, **characterized in that** the clamping bracket (36) directly adjacent to each lens (30) braces the connecting webs (34; 35) by means of a clip (39) and **in that** both clips (39) are connected to each other by a connecting bracket (40).

20. Spectacles according to Claim 19, **characterized in that** the connecting bracket (40) is designed as a stabilizing part of the connecting webs (34; 35) and thus of the entire spectacles.

21. Spectacles according to Claim 19, **characterized in that** the connecting bracket (40) is designed as a nose support of the spectacles.

22. Spectacles according to one of preceding Claims 18 to 21, **characterized in that** continuations (42) for the nose support surfaces are arranged on the clamping bracket (36; 37; 38).

23. Spectacles according to one of preceding Claims 18 to 22, **characterized in that** the upper and the lower frame parts (32; 33) are connected to each other, in the area of their connecting webs (34; 35), by a coupling web (41).

24. Spectacles according to one of preceding Claims 18 to 23, **characterized in that** receiving grooves (44) for the clips (39) are provided in the frame (1-6).

## Revendications

1. Lunettes constituées d'une structure de lunettes (1-6) avec une fixation pour les verres de lunettes (30) et avec un support de nez ainsi que des branches de lunettes (13) articulées par le biais de charnières, une branche de lunettes (13) présentant au moins dans sa région d'extrémité (14) tournée vers la structure de lunettes (1-6) une section transversale cylindrique circulaire, qui est orientée dans une direction parallèle au plan de la structure de lunettes (1-6), approximativement verticale, et des ouvertures de réception (15-18) pour les régions d'extrémité (14) des branches de lunettes (13) étant prévues dans la structure de lunettes (1-6), lesquelles sont disposées dans ces branches de lunettes, **caractérisées en ce que** la branche de lunettes traverse ce plan de l'arrière vers l'avant, **en ce que** des évidements (7 ; 8) pour des composants de charnière (9-12) sont prévus dans la structure de lunettes (1-6), lesquels présentent les ouvertures de réception (15-18) pour les régions d'extrémité (14) des branches de lunettes (13), lesquelles sont disposées dans ces branches de lunettes, et **en ce que** les composants de charnière (9-12) sont insérés de l'avant vers l'arrière dans les évidements (7) des lunettes et la région d'extrémité (14) d'une branche de lunettes (13) vient en prise latéralement autour du plan de la structure de lunettes (1-6) ou traverse un autre évidement (23) dans les lunettes, de l'arrière vers l'avant.

2. Lunettes selon la revendication 1, **caractérisées en ce que** les composants de charnière (9-12) sont réalisés au moins dans des régions partielles de manière élastique, et sont fixés par engagement par coopération de forme et/ou par force dans les évidements (7) des lunettes.

3. Lunettes selon l'une quelconque des revendications précédentes, **caractérisées en ce qu'**un composant de charnière (9 ; 11) présente un évidement du bord (19 ; 20) dans la dimension de l'épaisseur de paroi de la structure de lunettes (1-6).

4. Lunettes selon l'une quelconque des revendications précédentes, **caractérisées en ce qu'**un composant de charnière (9) présente une forme de bloc, qui possède en tant qu'ouverture de réception (15) un alésage, avec un évidement en forme de fente (21) s'étendant radialement vers l'extérieur et vers l'arrière depuis l'alésage.

5. Lunettes selon la revendication 4, **caractérisées en ce que** dans l'ouverture de réception (15) est disposée une douille en plastique (22) avec un alésage interne pour la région d'extrémité (14) de la branche de lunettes (13).

6. Lunettes selon l'une quelconque des revendications précédentes, **caractérisées en ce que** l'autre évidement (23) présente la forme d'un trou oblong s'étendant approximativement horizontalement, et les régions d'extrémité (14) du trou oblong forment la butée de mouvement des branches de lunettes (13).

7. Lunettes selon l'une quelconque des revendications précédentes, **caractérisées en ce qu'**un composant de charnière (10) présente la forme d'un ruban de matériau élastique recourbé approximativement en forme de U, comme une tôle d'acier à ressort, avec des branches libres (25) qui s'étendent dans ou à travers l'évidement (7) dans la structure de lunettes (1-6).

8. Lunettes selon la revendication 7, **caractérisées en ce que** la tôle d'acier à ressort est pourvue, sur les branches libres (25), de pattes recourbées l'une vers l'autre, qui se recouvrent mutuellement.

9. Lunettes selon l'une quelconque des revendications précédentes, **caractérisées en ce que** le composant de charnière (11 ; 12) est réalisé sous forme d'arceau de tôle plat approximativement en forme de U ou de V, ou de fil d'acier, dont les branches latérales libres (26) sont insérées par l'avant dans l'évidement (7) des lunettes, la branche de connexion (27) et les parties rapportées des branches latérales (26) formant l'ouverture de réception (17 ; 18) du composant de charnière (11 ; 12).

10. Lunettes selon l'une quelconque des revendications précédentes, **caractérisées en ce que** les évidements (7) pour les composants de charnière (9-12) sont pratiqués dans la structure de lunettes (1-5) ou dans les régions de bord extérieures des verres (30).

11. Lunettes selon l'une quelconque des revendications précédentes, **caractérisées en ce que** les régions d'extrémité (14) des branches de lunettes (13) sont guidées de haut en bas ou de bas en haut à travers les composants de charnière (9-12).

12. Lunettes selon l'une quelconque des revendications précédentes, **caractérisées en ce que** les régions d'extrémité (14) des branches de lunettes (13) sont retournées au niveau de leurs derniers bouts dans la direction des branches de lunettes (13) et s'engagent dans un évidement supplémentaire (24) dans les lunettes ou le traversent.

13. Lunettes selon la revendication 12, **caractérisées en ce qu'**une pièce d'une branche de lunettes (13) venant en prise à travers l'évidement supplémentaire (24) est à nouveau guidée dans la direction de la première branche de lunettes (13) en formant une double branche de lunettes.

14. Lunettes selon l'une quelconque des revendications précédentes, **caractérisées en ce qu'**une région d'extrémité (14) d'une branche de lunettes (13) vient en prise latéralement autour de la structure de lunettes (1-6) ou autour d'un verre (30).

15. Lunettes selon l'une quelconque des revendications précédentes, **caractérisées en ce que** le côté avant de la structure de lunettes (1-6) ou d'un verre (30) forme une surface d'appui linéaire pour la région d'extrémité (14) de la branche de lunettes (13) et donc une partie de la charnière.

16. Lunettes selon l'une quelconque des revendications précédentes, **caractérisées en ce que** le contour de la structure de lunettes est formé d'une plaque plane.

17. Lunettes selon la revendication 16, **caractérisées en ce que** la plaque présente dans l'ensemble la même épaisseur de paroi.

18. Lunettes selon l'une quelconque des revendications précédentes, **caractérisées en ce que** la structure de lunettes (1) se compose d'une partie de monture supérieure (32) entourant au moins partiellement par le dessus les deux verres (30), et d'une partie de monture inférieure (33) entourant au moins partiellement par le dessous les deux verres, lesquelles présentent à chaque fois des nervures de connexion (34 ; 35) disposées entre elles et au moins légèrement espacées l'une de l'autre, qui sont toutes deux maintenues serrées l'une contre l'autre pour la fixation d'un verre (30) par un étrier de serrage (36 ; 37 ; 38).

19. Lunettes selon la revendication 18, **caractérisées en ce que** l'étrier de serrage (36) serre immédiatement à côté de chaque verre (30) les nervures de connexion (34 ; 35) au moyen d'une pince (39) et les deux pinces (39) sont connectées l'une à l'autre par le biais d'un étrier de connexion (40).

20. Lunettes selon la revendication 19, **caractérisées en ce que** l'étrier de connexion (40) est réalisé sous forme de pièce de stabilisation des nervures de connexion (34 ; 35) et donc de l'ensemble des lunettes.

21. Lunettes selon la revendication 19, **caractérisées en ce que** l'étrier de connexion (40) est réalisé sous forme de support de nez des lunettes.

22. Lunettes selon l'une quelconque des revendications précédentes 18 à 21, **caractérisées en ce que** des saillies (42) pour les surfaces de support de nez sont disposées sur l'étrier de serrage (36 ; 37 ; 38).

23. Lunettes selon l'une quelconque des revendications précédentes 18 à 22, **caractérisées en ce que** la partie de monture supérieure et la partie de monture inférieure (32 ; 33) sont connectées l'une à l'autre dans la région de leurs nervures de connexion (34 ; 35) par le biais d'une nervure d'accouplement (41).

24. Lunettes selon l'une quelconque des revendications précédentes 18 à 23, **caractérisées en ce que** des rainures de réception (44) pour les pinces (39) sont prévues dans la structure de lunettes (1-6).
